Europäisches Patentamt

(19) European Patent Office

Office européen des brevets

(11) Publication number: **0 302 061 B1**

(12) # EUROPEAN PATENT SPECIFICATION

(45) Date of publication of patent specification :
30.10.91 Bulletin 91/44

(51) Int. Cl.⁵ : **F16L 55/16**

(21) Application number : 87901733.3

(22) Date of filing : 03.03.87

(86) International application number :
PCT/SE87/00099

(87) International publication number :
WO 87/05376 11.09.87 Gazette 87/20

(54) **PIPE FOR RELINING UNDERGROUND PIPELINES.**

(30) Priority : 04.03.86 SE 8600964

(43) Date of publication of application :
08.02.89 Bulletin 89/06

(45) Publication of the grant of the patent :
30.10.91 Bulletin 91/44

(84) Designated Contracting States :
AT BE CH DE FR GB IT LI LU NL SE

(56) References cited :
EP-A- 0 009 105
EP-A- 0 213 674
DE-A- 3 218 539
SE-B- 0 409 613
SE-B- 0 438 901
US-A- 4 037 626
US-A- 4 312 383

(73) Proprietor : Uponor N.V.
Fouress Building Emmaplein P.O. Box 259
Philipsburg Sint Maarten The Netherlands
Antilles (AN)

(72) Inventor : JOHANSSON, Thomas
Amiralsvägen 14
S-438 00 Landvetter (SE)
Inventor : OLSSON, Björn
Enehagsgatan 199
S-441 57 Alingsas (SE)

(74) Representative : Ström, Tore et al
Ström & Gulliksson AB Studentgatan 1 P.O.
Box 4188
S-203 13 Malmö (SE)

## Description

The invention relates to a pipe for relining underground pipelines.

A method for restoring underground pipelines comprises relining of the pipeline with a pipe which is drawn into the pipeline and is then fixed therein by a hardening material, e.g. cement mortar, being injected between the outside of the relining pipe and the inside of the pipeline. The relining pipes which are used at present are relatively stiff and therefore it is in most cases necessary to make a large excavated shaft at one end of the pipeline where the relining pipe is to be inserted into the underground pipeline. Moreover, it may be difficult to draw these relining pipes through the pipeline if there is a restriction, a change of direction, or some other obstacle in the old pipeline.

The object of the invention is to provide a relining pipe which can be handled more easily and which facilitates the insertion and reduces the work that has to be done at the site as compared with the use of conventional relining pipes also in case of obstacles in the pipeline.

The relining pipe provided according to the invention comprises a pipe of known composite type with an annularly rigid corrugated outside wall of polymer material, which is attached to the outside surface of an inside wall. In known embodiments of this type of pipes, (see for example DE-A-3 218 539) the inside wall is rigid and thus the composite pipe is so stiff that it is not suited for overcoming the drawbacks mentioned above.

In order to achieve the object of the invention the pipe has therefore obtained the characteristic features appearing from claim 1.

For a better understanding of the invention this will be described in more detail below, reference being made to the accompanying drawings in which

FIG. 1 is a half side view and a half axial sectional view of a relining pipe according to one embodiment of the invention,

FIG. 2 is a vertical sectional view which illustrates the use of the relining pipe according to FIG. 1,

FIG. 3 is a fragmentary axial sectional view of a relining pipe of the invention with another profile of the outside wall of the pipe,

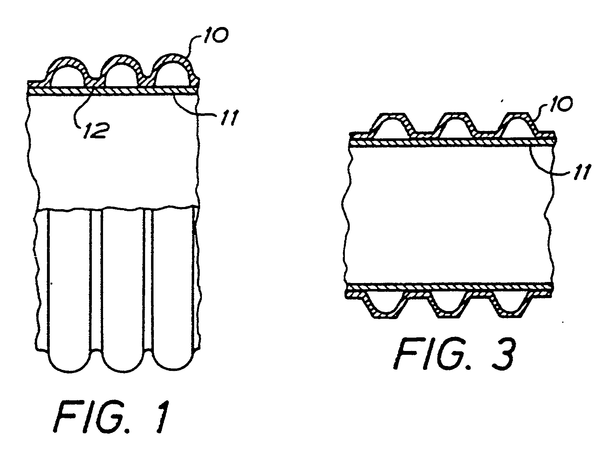

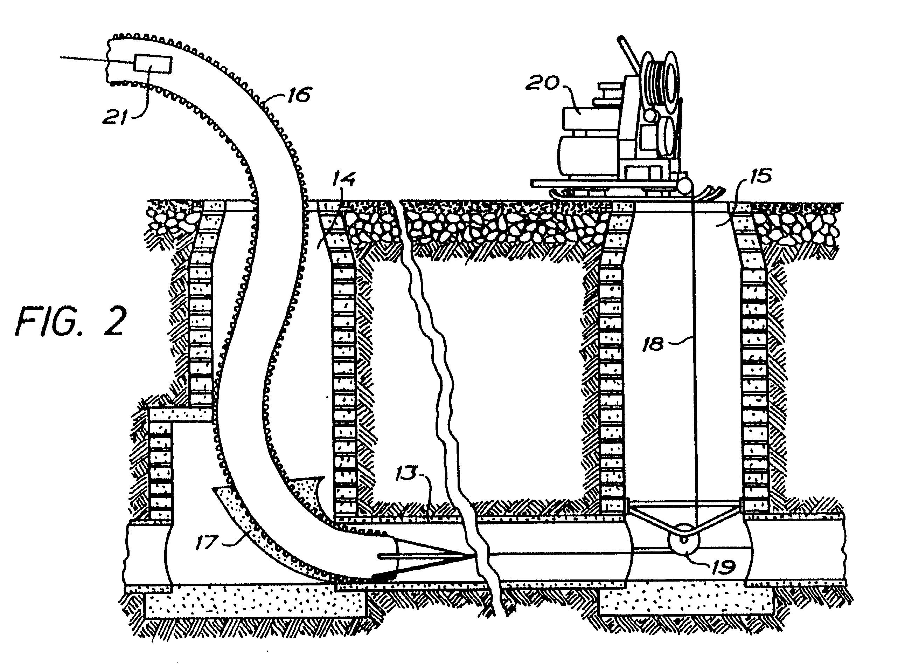

The relining pipe shown in FIG. 1 is of a known embodiment as far as it comprises a corrugated outside wall 10 and an inside wall 11 having smooth inside and outside surfaces, the inner peaks of the outside wall being attached to the smooth outside surface of the inside wall at 12. The ribs of the corrugated outside wall in this case have a semi-circular shape. The outside wall consists of polyethylene, polypropylene, or PVC as is customary for pipes of the type referred to herein. However, the inside smooth wall 11 of the pipe according to the invention consists of a thermoplastic elastomer which can be worked in an extruder and can be fused to the corrugated outside wall. Suitable materials for the inside wall can be e.g. EPDM mixed with polyethylene (syntetic rubber). The relining pipe described is finished in a factory and can then be used without any after-treatment for restoration of underground pipelines in the manner illustrated in FIG. 2.

In FIG. 2 there is shown an underground pipeline 13 which extends between a manhole 14 and a manhole 15. The figure shows that the relining pipe generally indicated at 16 herein, is inserted into the pipeline from the end thereof which connects to the manhole 14. Since the relining pipe according to the invention can be easily bent at a relatively small radius due to the fact that the inside wall 11 consists of a thermoplastic elastomer so that it can be compressed (wrinkled) at the inner side of the bend and/or can be stretched at the outer side of the bend so as to return to a tensionfree condition when the relining pipe is straightened out, no excavation need be made at the insert end of the pipeline; the relining pipe can easily pass from ground level through the manhole 14 into the pipeline 13 while being bent to the extent necessary. In order to facilitate the passage of the relining pipe into the pipeline a bent insertion funnel 17 is provided at the insert end of the pipeline. The relining pipe is drawn into the pipeline by means of a rope 18 which extends over a pulley 19 in the manhole 15 and is connected to a hoist 20 located at ground level.

Due to the fact that the relining pipe has corrugation ribs of semi-circular shape, the insertion of the relining pipe into the pipeline is facilitated, because in that case the relining pipe more easily can pass existing sharp edges in the pipeline without getting caught by such edges. Moreover, the flexible construction makes it very easy to pass depressions and direction changes in the old pipeline. The insertion is further facilitated by the relining pipe when being stretched e.g. due to the fact that it jams in the pipeline owing to existing great friction forces or for other reasons, diminishes in diameter and therefore more easily can pass restrictions in the pipeline.

The corrugated outside wall 10 imparts annular rigidity to the relining pipe, the smooth inside surface of the pipe at the same time being hydraulically advantageous. When the relining pipe has been installed, it is fixed in the position thereof e.g. by injecting a hardening material such as cement mortar between the outside surface of the relining pipe and the inside surface of the pipeline, the corrugated outside surface of the relining pipe providing a good adhesion to the relining pipe. However, it is possible to exclude such injection when using the relining pipe of the invention. If a certain resistance is established against the insertion of the relining pipe, the outside diameter of this pipe will decrease when the pipe is being drawn into the pipeline and then, when the relining pipe is left alone and the stretching thereof ceases, the pipe will return to the original outside diameter which can have such dimension in relation to the inside diameter of the pipeline that the relining pipe presses against the inside surface of the pipeline and accordingly is held fixed therein.

The outside wall of the relining pipe described can also have conventional parallelogrammic profile as shown in FIG. 3.

## Claims

1. Pipe for relining underground pipelines, which is of composite type with an annularly rigid corrugated outside wall (10) of polymer material, attached to a smooth outside surface of an elastic inside wall (11) having also a smooth inside surface, **characterized** in that the inside wall (11) is made of a thermoplastic elastomer which consists of EPDM mixed with polyethylene and which can be processed in an extruder.

2. Pipe as claimed in claim 1 wherein the outside wall (10) forms corrugation ribs having substantially semicircular shape.

3. Pipe as claimed in claim 1 wherein the outside wall (10) consists of polyethylene.

## Patentansprüche

1. Rohr zur Wiederbeschichtung von unterirdischen Leitungen, das vom zusammengesetzten Typ mit einer ringförmig starren, gewellten Außenwandung (10) aus Polymermaterial ist, die an einer glatten Außenoberfläche einer elastischen Innenwandung (11) mit ebenfalls einer glatten Innenoberfläche anliegt, dadurch gekennzeichnet, daß die Innenwandung (11) aus einem thermoplastischen Elastomer hergestellt ist, das aus EPDM, vermischt mit Polyethylen, besteht und in einem Extruder verarbeitet werden kann.

2. Rohr wie beansprucht in Anspruch 1, bei dem die Außenwandung (10) gewellte Rippen mit im wesentlichen Halbkreisform bildet.

3. Rohr wie beansprucht in Anspruch 1, bei dem die Außenwandung (10) aus Polyethylen besteht.

## Revendications

1. Tuyau, pour regarnir des conduites enterrées, du type composite, avec une paroi extérieure (10) ondulée rigide et annulaire, en matériau polymère, fixée sur une surface extérieure lisse d'une paroi intérieure élastique (11) présentant également une surface intérieure lisse, caractérisé en ce que la paroi intérieure (11) est réalisée en un élastomère thermoplastique, qui consiste en un APDM mélangé à du polyéthylène et pouvant être traité par une extrudeuse.

2. Tuyau selon la revendication 1, dans lequel la paroi extérieure (10) forme des nervures d'ondulation présentant une forme sensiblement semi-circulaire.

3. Tuyau selon la revendication 1, dans lequel la paroi extérieure (10) est en polyéthylène.

FIG. 1

FIG. 3

FIG. 2

EP 0 302 061 B1